Europäisches Patentamt

European Patent Office

Office européen des brevets

(19)

(11) EP 1 225 203 A1

(12) EUROPÄISCHE PATENTANMELDUNG

(43) Veröffentlichungstag:
24.07.2002  Patentblatt 2002/30

(51) Int Cl.7: C08L 67/02

(21) Anmeldenummer: 02000944.5

(22) Anmeldetag: 16.01.2002

(84) Benannte Vertragsstaaten:
AT BE CH CY DE DK ES FI FR GB GR IE IT LI LU
MC NL PT SE TR
Benannte Erstreckungsstaaten:
AL LT LV MK RO SI

(30) Priorität: 18.01.2001  DE 10102075

(71) Anmelder: Menzolit-Fibron GmbH
75015 Bretten (DE)

(72) Erfinder:
• Belin, Jean-Gilles
  41120 Les Montils (FR)
• Demoulin, Cyril
  41000 Blois (FR)
• Durand, Herve
  41250 Mont pres chamboid (FR)
• Guegan, Marie-Laure
  41000 Blois (FR)

(74) Vertreter: Uppena, Franz, Dr. et al
Dynamit Nobel Aktiengesellschaft,
Patente, Marken & Lizenzen
53839 Troisdorf (DE)

(54) **Verwendung von thermoplastischen Additiven mit hoher Glasübergangstemperatur in einer duroplastischen Matrix**

(57)  Beschrieben wird die Verwendung von thermoplastischen Additiven mit einer Glasübergangstemperatur (Tg) von 140 bis 220 °C, bevorzugt 160 bis 215 °C in duroplastischen Formteilen. Dadurch wird eine Reduzierung der Emissionswerte beim Formvorgang erreicht.

Figur 1: Emission von Styrol während der Formungszyklen

Measurement of styrene emission with Drager Pump

Printed by Jouve, 75001 PARIS (FR)

**Beschreibung**

Die Erfindung betrifft die Verwendung von thermoplastischen Additiven mit hoher Glasübergangstemperatur (auch Tg genannt) in einer duroplastischen Matrix.

In duroplastischen Formteilen werden zur Erzielung glatter Oberflächen thermoplasitsche Additive (sogenannte low-profile-Additive), z.B. Polystyrol, Polymethylmethacrylat, Polyvinylacrylat, Elastomere oder thermoplastische Polyester, eingesetzt. Die Verwendung dieser thermoplastischen Additive hat den Nachteil, dass es zu ungewünschten Emissionen aus den Formteilen kommen kann und dass beim Entformen der Formteile bei Werkzeugtemperaturen (140 bis 160 °C) Mikrorisse in den Formteilen entstehen können.

Aufgabe der Erfindung ist es, die Nachteile des Standes der Technik zu überwinden und insbesondere Additive zu finden, die bei gleichzeitiger Verwendung mit den low-profile-Additiven in duroplastischen Formteilen bei ansonsten gleichbleibenden Eigenschaften eine Reduzierung der Emissionswerte erlauben, die bei höheren Temperaturen (140 bis 160 °C) einen geringeren Festigkeitsabfall bewirken und damit zu weniger Mikrorissen in den Formteilen führen und die eine höhere Steifigkeit der Formteile bei Entformungstemperaturen und damit einen geringeren Verzug der Formteile bewirken.

Gelöst wird die Aufgabe durch die Verwendung von thermoplastischen Additiven mit einer Glasübergangstemperatur (Tg) von 140 bis 220 °C, bevorzugt 160 bis 215 °C, besonders bevorzugt 185 bis 200 °C. Diese Additive werden in der Regel zusätzlich zu den bisher verwendeten low-profile-Additiven eingesetzt, wobei der Anteil der low-profile-Additive gesenkt werden kann. Zur Unterscheidung von den (ebenfalls thermoplastischen) low-profile-Additiven werden die erfindungsgemäß zu verwendenden thermoplastischen Additive mit einer Tg von 140 bis 220 °C im folgenden als Tg-Additive bezeichnet.

Die Glasübergangstemperatur Tg der verwendeten Tg-Additive wird mit Hilfe der DSC-Methode (Differential Scanning Calorimetry) folgendermaßen gemessen: Die Probe wird von 40 °C auf 240 °C mit einer Heizgeschwindigkeit von 20 °/Minute erhitzt. Dann wird die Probe auf 40 °C abgekühlt. Danach wird die Probe erneut von 40 °C auf 240 °C mit einer Heizgeschwindigkeit von 20 °/Minute erhitzt. In einem Diagramm wird der Wärmefluss gegen die Temperatur aufgetragen die Tg durch Extrapolation gemäß der bekannten ½-Cp-Methode bestimmt (Bruce Cassel, Michael P. DiVito: "Use of DSC to obtain accurate thermodynamic and kinetic data", American Laboratory, Jan. 1994).

Bevorzugt sind die Tg-Additive in Styrol löslich. Es hat sich als zweckmäßig erwiesen, die einzusetzende Menge Tg-Additive vor der Zugabe zur duroplastischen Formmasse in Styrol zu lösen. In einer solchen Lösung haben die Tg-Additive eine bevorzugte Konzentration von 10 bis 20 Gew.-%.

Als bevorzugte Tg-Additive werden Polyphenylenoxide oder modifizierte Polyphenylenoxide (z.B. PPO®) mit entsprechender Glasübergangstemperatur verwendet. Polyphenylenoxide sind beschrieben z. B. in der US 3 306 874, US 3 306 875, US 3 257 357 und US 3 257 358.

Bevorzugt werden die erfindungsgemäß verwendeten Additive in einer Menge von 0,05 bis 2 Gew.-%, besonders bevorzugt 0,1 bis 1,8 Gew.-% und ganz besonders bevorzugt 0,2 bis 1,5 Gew.-% der duroplastischen Formmasse zugegeben. Dabei beziehen sich die Gew.-%-Angaben auf die Menge Additiv (ohne evtl. Lösungmittel) bezogen auf die Gesamtmenge duroplastische Formmasse (incl. der Mengen Additiv und Lösungsmittel).

Als duropalstische Formmasse können bevorzugt ungesättigte Polyesterharze eingesetzt werden. Diese können z.B. auf Maleinsäure, Propylenglycol und Neopentylglycol basieren und in Styrol gelöst sein (Feststoffgehalt dieser Lösung z.B. 65 bis 70 Gew.-%).

Von Vorteil der erfindungsgemäßen Verwendung sind eine Reduzierung der Emissionswerte, eine Verminderung der Gerüche beim sogenannten Schnüffeltest und bessere mechanische Eigenschaften der Formteile bei höheren Temperaturen.

Der Gegenstand der Erfindung wird nachfolgend anhand von Beispielen näher erläutert:

**Vergleichsbeispiel A: Duroplastische BMC-Formmasse nach dem Stand der Technik**

| Folgende Inhaltsstoffe wurden eingesetzt: | Gew.-% |
|---|---|
| Ungesättigtes Maleinsäureharz (65 bis 67 %-ig in Styrol) | 12,2 |
| Polymethacrylat | 3,2 |
| Elastomer, basierend auf einem Styrol-Butadien-Copolymer | 0,55 |
| Styrol | 6,1 |
| Tert-butylperhexanoat | 0,4 |
| Inhibitor (para-Benzochinon 10 %-ig in Methylethylketon) | 0,014 |

(fortgesetzt)

| Folgende Inhaltsstoffe wurden eingesetzt: | Gew.-% |
|---|---|
| Calciumstearat | 1,4 |
| Calciumcarbonat | 62,1 |
| Glasfasern (6 mm Länge) | 14 |

Durch das Vermischen aller Inhaltsstoffe wurde in bekannter Weise eine BMC-Formmasse hergestellt und zwischen 140 und 150 °C geformt. Es wurden 10 Formteile hergestellt, und es wurden verschiedene Tests durchgeführt.

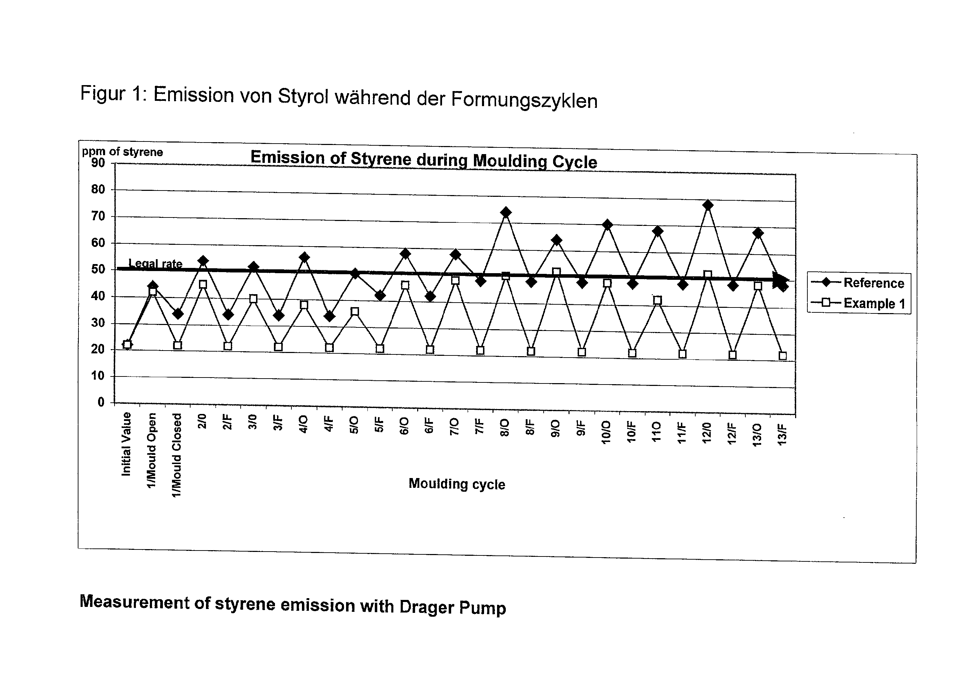

Während der Formung mehrerer Formteile wurde die Styrol-Emission mit Dräger-Röhrchen gemessen. Die Ergebnisse sind in der Figur 1 dargestellt. Dabei ist zwischen den Zuständen "O" (geöffnete Form) und "F" (geschlossene Form) zu unterscheiden.

Die Emission von Kohlenstoff enthaltenen Verbindungen wurde durch eine sogenannte Headspace Gaschromatografie (entsprechend der Methode AUDI PV3341) gemessen. Ergebnis: 650 ppm.

Der lineare Schwund betrug - 0,08 % (Es lag also eine Expansion vor). Der lineare Schwund in % berechnet sich aus der Länge $L_0$ der Form bei Raumtemperatur und der Länge L des Formteils bei Raumtemperatur nach:

$$100*(L_0-L)/L_0.$$

Die Oberfläche der Formteile wurde mit gut bewertet. Es gab keine Mikrorisse. 4 der 10 Formteile wiesen Blasen auf.

Der Schnüffeltest nach VW AUDI PV 3900 (Skala von 1 = gut bis 6 = schlecht) ergab einen Wert von 4 bis 5.

**Beispiel 1: Duroplastische BMC-Formmasse mit einem modifizierten Polyphenylenoxid (Tg = 190 °C) als thermoplastischem Additiv (Anteil 1,26 %)**

| Folgende Inhaltsstoffe wurden eingesetzt: | Gew.-% |
|---|---|
| Ungesättigtes Maleinsäureharz (65 bis 67 %-ig in Styrol) | 12,3 |
| 15 %-ige Lösung eines modifizierten Polyphenylenoxides mit einer Tg von 190 °C (PPO® 855 A von General Electric) in Styrol | 8,4 |
| Elastomer, basierend auf einem Styrol-Butadien-Copolymer | 0,6 |
| Styrol | 1,3 |
| Tert-butylperbenzoat | 0,23 |
| Tert-butylperhexanoat | 0,1 |
| Inhibitor (para-Benzochinon 10 %-ig in Methylethylketon) | 0,014 |
| Calciumstearat | 1,1 |
| Calciumcarbonat | 63 |
| Glasfasern (6 mm Länge) | 13 |

Der Anteil an reinem PPO® 855 A in der Formmasse betrug 1,26 Gew.-%. Im Vergleich zum Vergleichsbeispiel A wurde ein Teil der low-profile-Additive (Polymethacrylat und Elastomer) aus der Rezeptur herausgenommen (Polymethacrylat). Der Gesamtanteil der thermoplastischen Additive betrug 1,86 Gew.-% (0,6 Gew.-% Elastomer und 1,26 Gew.-% PPO® 855 A).

Durch das Vermischen aller Inhaltsstoffe wurde in bekannter Weise eine BMC-Formmasse hergestellt und zwischen 140 und 150 °C geformt. Es wurden 10 Formteile hergestellt, und es wurden verschiedene Tests durchgeführt.

Während der Formung wurde die Styrol-Emission mit Dräger-Röhrchen gemessen. Die Ergebnisse sind ebenfalls in der Figur 1 dargestellt.

Die Emission von Kohlenstoff enthaltenen Verbindungen wurde durch eine sogenannte Headspace Gaschromatografie (entsprechend der Methode AUDI PV3341) gemessen. Ergebnis: 60 ppm.

Der lineare Schwund betrug - 0,06 % (Es lag also eine Expansion vor).

Die Oberfläche der Formteile wurde mit gut bewertet. Es gab keine Mikrorisse. 1 der 10 Formteile wies Blasen auf.

Der Schnüffeltest nach VW AUDI PV 3900 (Skala von 1 = gut bis 6 = schlecht) ergab einen Wert von 2 bis 3.

Durch die erfindungsgemäße Verwendung des modifizierten Polyphenylenoxides mit einer Tg von 190 °C konnte die unerwünschte Emission deutlich verringert werden. Sogar die Anzahl der Defekte (Blasen) ging zurück.

**Beispiel 2: Duroplastische BMC-Formmasse mit einem modifizierten Polyphenylenoxid (Tg = 190 °C) als thermoplastischem Additiv (Anteil 1,29 %)**

| Folgende Inhaltsstoffe wurden eingesetzt: | Gew.-% |
|---|---|
| Ungesättigtes Maleinsäureharz (65 bis 67 %-ig in Styrol) | 12,6 |
| 15 %-ige Lösung eines modifizierten Polyphenylenoxides mit einer Tg von 190 °C (PPO® 855 A von General Electric) in Styrol | 8,6 |
| Tert-butylperbenzoat | 0,24 |
| Tert-butylperhexanoat | 0,1 |
| Inhibitor (para-Benzochinon 10 %-ig in Methylethylketon) | 0,014 |
| Calciumstearat | 1,1 |
| Calciumcarbonat | 64,4 |
| Glasfasern (6 mm Länge) | 13 |

Der Anteil an reinem PPO® 855 A in der Formmasse betrug 1,29 Gew.-%. Im Vergleich zum Vergleichsbeispiel A wurden die low-profile-Additive Polymethacrylat und Elastomer aus der Rezeptur herausgenommen.

Durch das Vermischen aller Inhaltsstoffe wurde in bekannter Weise eine BMC-Formmasse hergestellt und zwischen 140 und 150 °C geformt. Es wurden 10 Formteile hergestellt.

Der lineare Schwund betrug 0,02 %.

Die Oberfläche der Formteile wurde mit schlecht bewertet. Es traten Brüche auf. 1 der 10 Formteile wies Blasen auf.

Der Schnüffeltest nach VW AUDI PV 3900 (Skala von 1 = gut bis 6 = schlecht) ergab einen Wert von 2 bis 3.

Durch die erfindungsgemäße Verwendung des modifizierten Polyphenylenoxides mit einer Tg von 190 °C ohne gleichzeitige Verwendung anderer thermoplastischer low-profile-Additive konnte zwar die unerwünschte Emission deutlich verringert werden, allerdings ließen in diesem Beispiel die mechanischen Eigenschaften sehr zu wünschen übrig. Dies zeigt, dass das eingesetzte Tg-Additiv hier alleine nicht als low-profile-Additiv wirkt.

**Vergleichsbeispiel B: Duroplastische SMC-Formmasse nach dem Stand der Technik**

| Folgende Inhaltsstoffe wurden eingesetzt: | Gew.-% |
|---|---|
| Ungesättigtes Maleinsäureharz (65 bis 67 %-ig in Styrol) | 17,5 |
| 40 %-ige Lösung von Polymethacrylat in Styrol | 11,7 |
| Tert-butylperbenzoat | 0,3 |
| Inhibitor (para-Benzochinon 10 %-ig in Methylethylketon) | 0,15 |
| Calciumstearat | 1,2 |
| Calciumcarbonat | 46,6 |
| Magnesiumoxid | 0,8 |
| Glasfasern (25 mm Länge) | 21,8 |

Durch das Vermischen aller Inhaltsstoffe wurde in bekannter Weise eine SMC-Formmasse hergestellt und zwischen 150 und 160 °C geformt.

Der lineare Schwund betrug 0,03 %.

Der Schnüffeltest nach VW AUDI PV 3900 (Skala von 1 = gut bis 6 = schlecht) ergab einen Wert von 4 bis 5.

**Beispiel 3: Duroplastischen SMC Formmasse mit einem modifizierten Polyphenylenoxid (Tg = 190 °C) als thermoplastischem Additiv (Anteil 0,44 %)**

| Folgende Inhaltsstoffe wurden eingesetzt: | Gew.-% |
|---|---|
| Ungesättigtes Maleinsäureharz (65 bis 67 %-ig in Styrol) | 17,5 |
| 40 %-ige Lösung von Polymethacrylat in Styrol | 8,7 |
| 15 %-ige Lösung eines modifizierten Polyphenylenoxides mit einer Tg von 190 °C (PPO® 855 A von General Electric) in Styrol | 2,9 |
| Tert-butylperbenzoat | 0,3 |
| Inhibitor (para-Benzochinon 10 %-ig in Methylethylketon) | 0,15 |
| Calciumstearat | 1,2 |
| Calciumcarbonat | 46,6 |
| Magnesiumoxid | 0,8 |
| Glasfasern (25 mm Länge) | 21,8 |

Der Anteil an reinem PPO® 855 A in der Formmasse betrug 0,44 Gew.-%.
Durch das Vermischen aller Inhaltsstoffe wurde in bekannter Weise eine SMC-Formmasse hergestellt und zwischen 150 und 160 °C geformt.
Der lineare Schwund betrug 0,06 %.
Der Schnüffeltest nach VW AUDI PV 39 00 (Skala von 1 = gut bis 6 = schlecht) ergab einen Wert von 2 bis 3.

**Beispiel 4: Duroplastische SMC-Formmasse mit einem modifizierten Polyphenylenoxid (Tg = 190 °C) als thermoplastischem Additiv (Anteil 1,31 %)**

| Folgende Inhaltsstoffe wurden eingesetzt: | Gew.-% |
|---|---|
| Ungesättigtes Maleinsäureharz (65 bis 67 %-ig in Styrol) | 17,5 |
| 40 %-ige Lösung von Polymethacrylat in Styrol | 2,9 |
| 15 %-ige Lösung eines modifizierten Polyphenylenoxides mit einer Tg von 190 °C (PPO® 855 A von General Electric) in Styrol | 8,7 |
| Tert-butylperbenzoat | 0,3 |
| Inhibitor (para-Benzochinon 10 %-ig in Methylethylketon) | 0,15 |
| Calciumstearat | 1,2 |
| Calciumcarbonat | 46,6 |
| Magnesiumoxid | 0,8 |
| Glasfasern (25 mm Länge) | 21,8 |

Der Anteil an reinem PPO® 855 A in der Formmasse betrug 1,31 Gew.-%.
Durch das Vermischen aller Inhaltsstoffe wurde in bekannter Weise eine SMC-Formmasse hergestellt und zwischen 150 und 160 °C geformt.
Der lineare Schwund betrug 0,08 %.
Der Schnüffeltest nach VW AUDI PV 3900 (Skala von 1 = gut bis 6 = schlecht) ergab einen Wert von 2 bis 3.
Aus Beispiel 3 ist ersichtlich, dass schon die erfindungsgemäße Verwendung von nur 0,44 % eines thermoplastischen Additivs deutlich bessere Ergebnisse beim Schnüffeltest bewirkt als beim Vergleichsbeispiel B. Eine Erhöhung des Anteils des thermoplastischen Additivs bewirkt nicht unbedingt eine Verbesserung der Eigenschaften des SMC-Werkstückes, der Effekt der geringeren Emission bleibt jedoch erhalten (Beispiel 4).

**Patentansprüche**

1. Verwendung von thermoplastischen Additiven mit einer Glasübergangstemperatur (Tg) von 140 bis 220 °C in duroplastischen Formteilen.

2. Verwendung nach Anspruch 1, **dadurch gekennzeichnet, dass** die Glasübergangstemperatur 160 bis 215 °C beträgt.

3. Verwendung nach Anspruch 1 oder 2, **dadurch gekennzeichnet, dass** die thermoplastischen Additive in Styrol löslich sind.

4. Verwendung nach einem der Ansprüche 1 bis 3, **dadurch gekennzeichnet, dass** als thermoplasitische Additive Polyphenylenoxide oder modifizierte Polyphenylenoxide eingesetzt werden.

5. Verwendung nach einem der Ansprüche 1 bis 4, **dadurch gekennzeichnet, dass** die thermoplastischen Additive der duroplastischen Formmasse in einer Menge von 0,05 bis 2 Gew.-% (bezogen auf die Formmasse) zugegeben werden.

6. Verwendung nach Anspruch 5, **dadurch gekennzeichnet, dass** die thermoplastischen Additive der duroplastischen Formmasse in einer Menge von 0,1 bis 1,8 Gew.-% zugegeben werden.

Figur 1: Emission von Styrol während der Formungszyklen

**Emission of Styrene during Moulding Cycle**

Measurement of styrene emission with Drager Pump

**Europäisches Patentamt**

# EUROPÄISCHER RECHERCHENBERICHT

Nummer der Anmeldung

EP 02 00 0944

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 1 029 894 A (MENZOLIT FIBRON GMBH) 23. August 2000 (2000-08-23) * Beispiele 1,2 * * Ansprüche 5,6 * --- | 1-6 | C08L67/02 |
| X | US 3 637 578 A (WRIGHT CARL L ET AL) 25. Januar 1972 (1972-01-25) * Spalte 3, Zeile 10 – Zeile 12 * * Spalte 4, Zeile 20 – Zeile 29 * --- | 1-4 | |

**RECHERCHIERTE SACHGEBIETE (Int.Cl.7)**

C08L

Der vorliegende Recherchenbericht wurde für alle Patentansprüche erstellt

| Recherchenort | Abschlußdatum der Recherche | Prüfer |
|---|---|---|
| DEN HAAG | 6. Mai 2002 | Paalman, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**                    EP 02 00 0944

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-05-2002

| Im Recherchenbericht angeführtes Patentdokument | Datum der Veröffentlichung | Mitglied(er) der Patentfamilie | Datum der Veröffentlichung |
|---|---|---|---|
| EP 1029894 A | 23-08-2000 | DE 19907016 A1<br>EP 1029894 A2 | 24-08-2000<br>23-08-2000 |
| US 3637578 A | 25-01-1972 | KEINE | |

EPO FORM P0461

Für nähere Einzelheiten zu diesem Anhang : siehe Amtsblatt des Europäischen Patentamts, Nr.12/82